# FASCICULE DE BREVET EUROPEEN

(11) **EP 1 054 174 B1**
(45) Date de publication et mention de la délivrance du brevet: **17.08.2005**
(21) Numéro de dépôt: 00119114.7
(22) Date de dépôt: 04.12.1996
(51) Int. Cl.: B60T 11/16, F15B 7/08, F16D 25/08, F16D 25/12

(54) **Cylindre pour commande hydraulique d'embrayage**
Hydraulischer Kupplungsausrückzylinder
Cylinder for hydraulic clutch control

(30) Priorité: 05.12.1995 FR 9514370
(43) Date de publication de la demande: 22.11.2000
(62) Demande divisionnaire de: 96119467.7
(73) Titulaire: VALEO EMBRAYAGES s.a.s., 80009 Amiens Cedex 1 (FR)
(72) Inventeur: Rey, Frédéric, 75011 Paris (FR)
(74) Mandataire: Lemaire, Marc

(56) Documents cités:
- EP-A- 0 345 451
- WO-A-87/03344
- DE-A- 3 713 248
- DE-A- 3 816 608
- DE-A- 3 910 691
- DE-A- 4 313 346
- DE-A- 4 322 969
- US-A- 5 291 974

## Description

Le document DE 37 13 248 A1 décrit un cylindre de commande conforme au préambule de la revendication 1.

L'invention concerne un cylindre de commande pour un dispositif de commande hydraulique d'un embrayage de véhicule, et un procédé pour l'assemblage d'un tel cylindre.

L'invention concerne plus particulièrement un cylindre de commande pour un dispositif de commande hydraulique d'un embrayage de véhicule automobile, du type dans lequel un corps principal de forme générale tubulaire étagée comporte une partie tubulaire avant, fermée à l'avant, et une partie tubulaire arrière de diamètre supérieur ouverte à l'arrière, les deux parties étant délimitées axialement par une paroi transversale annulaire, du type dans lequel une chambre hydraulique est délimitée dans la partie avant du corps principal par un piston dont un tronçon arrière est guidé dans un tube arrière monté dans la partie arrière du corps principal, et du type dans lequel l'étanchéité du cylindre est réalisée par deux joints annulaires qui coopèrent avec le piston.

L'assemblage des composants formant un tel cylindre fait appel à toute une série d'opérations dont l'enchaînement est dicté par la conception même du cylindre et notamment par les contraintes de montage imposées par les joints d'étanchéité ou par les moyens de fixation du tube arrière dans le corps principal.

Ainsi, il a été proposé dans la demande de brevet européen EP-A-0 345 451 un cylindre dans lequel un joint d'étanchéité principal est réalisé sous la forme d'une coupelle à lèvres qui est portée par le corps principal.

Or, le montage d'une telle coupelle nécessite l'utilisation d'un outillage spécifique car elle est montée serrée dans son logement et il faut donc procéder à son montage dans le corps principal préalablement à toute opération.

De plus, le tube arrière est fixé dans le corps principal par vissage, ce qui est une opération d'autant plus délicate à réaliser que le tube arrière et le corps principal sont réalisés en matière plastique et qu'ainsi la phase d'engagements des filetages respectifs des deux pièces doit être bien maîtrisée sous peine de les endommager gravement.

Dans le document US-A-5 291 974, le tube arrière est également fixé par vissage dans le corps principal et l'étanchéité du cylindre est réalisée par deux joints annulaires portés par le tube arrière et coopérant avec la piston.

L'invention a donc pour but de proposer un cylindre dont la conception en rende le montage particulièrement simple, notamment en vue de son automatisation.

Conformément à l'invention ce problème est résolu par la partie caractérisante de la revendication 1.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues partielles en coupe axiale d'un cylindre récepteur conforme aux enseignements de l'invention, dans lequel le piston est représenté respectivement dans une première position avancée et dans une seconde position reculée ; et
- la figure 3 est une vue partielle en coupe axiale d'une variante de réalisation de la fixation du tube arrière dans le corps principal.

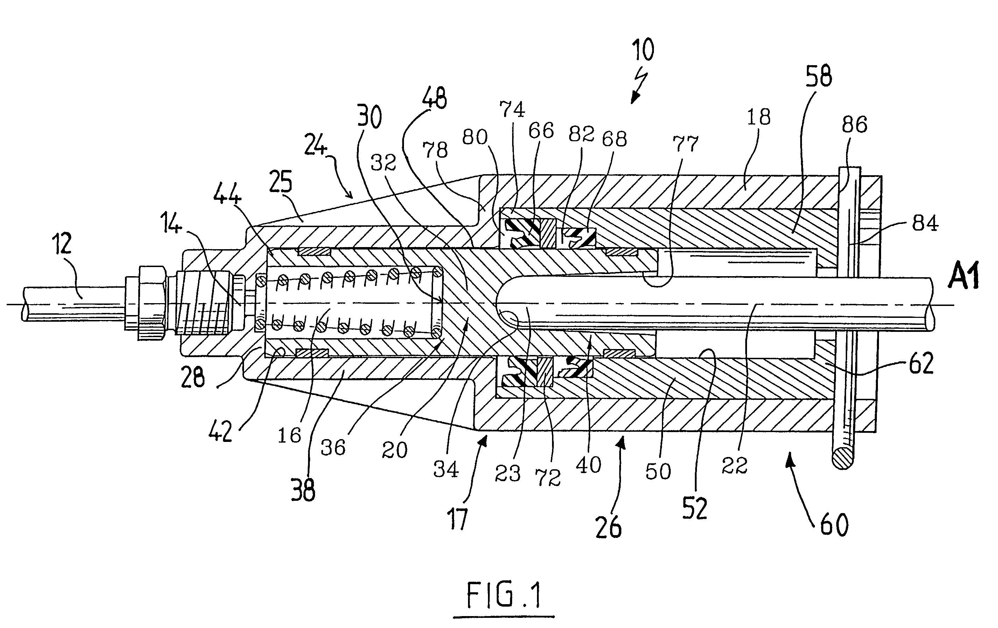

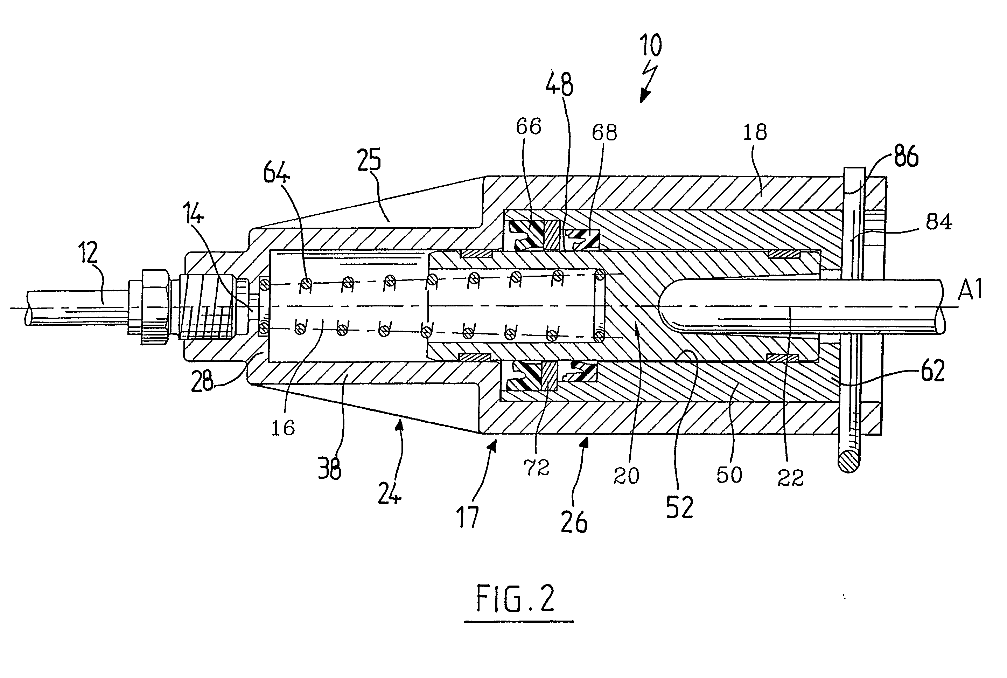

On a représenté sur les figures 1 et 2, un cylindre récepteur 10 d'un dispositif de commande hydraulique d'un embrayage de véhicule automobile.

Un tel dispositif (non représenté) comporte essentiellement un cylindre émetteur, de structure similaire au cylindre récepteur ici représenté, et dont un piston se déplace sous l'action d'une tige de commande reliée par exemple à une pédale d'embrayage sur laquelle agit le conducteur. Le piston du cylindre émetteur est destiné à expulser un fluide, tel que de l'huile, contenu dans une chambre hydraulique en direction d'une canalisation 12 qui relie le cylindre émetteur au cylindre récepteur 10.

La canalisation 12 débouche par un orifice d'entrée 14 à l'intérieur d'une chambre hydraulique 16 à volume variable délimitée dans un corps de cylindre 17 en matière plastique du cylindre récepteur 10 pour provoquer le déplacement d'un piston 20 qui, par l'intermédiaire d'une tige de commande 22, agit par exemple sur une fourchette de commande d'un embrayage (non représentée) pour provoquer le débrayage.

Le corps de cylindre 17 comporte un corps principal 18 en matière plastique qui présente une forme de tube étagé d'axe A1 et qui comporte une partie avant 24 de diamètre réduit par rapport à une partie arrière 26. Le diamètre interne de la partie avant 24 est donc inférieur au diamètre interne de la partie arrière 26.

Afin de rigidifier le corps de cylindre 17, il est prévu, tout autour de la partie avant 24 du corps principal 18, des nervures de rigidification 25. Le corps 18 est ouvert vers l'avant et vers l'arrière.

Plus précisément la chambre hydraulique 16 est délimitée dans la partie avant 24 du corps de cylindre 17 et elle est délimitée axialement, à l'avant, par une paroi transversale avant 28 dans laquelle est formé l'orifice d'entrée 14, et, à l'arrière, par une face transversale avant 30 du piston 20. Les joints 66 et 68 sont décalés axialement l'un par rapport à l'autre.

On peut prévoir de munir la chambre hydraulique de rainures axiales (non représentées) qui sont par exemple réalisées venues de matière par moulage avec le corps principal 18 et qui sont agencées angulairement en correspondance avec les nervures de rigidification 25. Les rainures permettent notamment de garantir une meilleure répartition de la pression de contact entre le piston 20 et le corps principal 18 et permettent également d'éviter qu'il n'y ait des surépaisseurs de matière dans le corps principal 18 au niveau des nervures 25, ce qui est particulièrement intéressant pour une pièce réalisée par moulage.

Par ailleurs, l'orifice d'entrée 14 débouche axialement dans la chambre hydraulique 16. Le volume de la chambre hydraulique 16 est susceptible de varier en fonction de la position du piston 20 dans le corps de cylindre 17, le piston 20 étant susceptible de coulisser axialement entre une première position avancée représentée sur la figure 1 et une deuxième position reculée représentée sur la figure 2.

Le piston 20 qui est représenté dans ces figures est réalisé par forgeage, par exemple en acier, mais d'autres modes de réalisation, tels que l'emboutissage d'une tôle métallique ou le moulage, sont envisageables.

Le piston 20 est essentiellement formé d'une paroi transversale 32, dont la face avant 30 délimite la chambre hydraulique 16 et dont une face arrière 34 coopère avec la tige de commande 22, et d'une jupe latérale cylindrique 36 qui assure le guidage du piston 20 dans le corps de cylindre 17.

Le piston 20 étant réalisé par forgeage, la forme de la face arrière 34 est complémentaire de celle de l'extrémité avant 23 de la tige de commande 22. Dans un dispositif de commande hydraulique d'un embrayage, la pression du fluide est susceptible d'atteindre des valeurs de l'ordre de 30 à 40 bars et il est donc nécessaire d'assurer, d'une part, un excellent guidage du piston 20 dans le corps de cylindre 17, pour éviter tout risque d'arc-boutement et de coincement et, d'autre part, d'assurer une étanchéité de très bonne qualité susceptible de résister à de telles pressions.

Dans le but d'améliorer le guidage du piston 20, la jupe annulaire 36 s'étend axialement sur une longueur dont la valeur est comprise entre trois et quatre fois la valeur de son diamètre et comporte ainsi, de part et d'autre de la paroi transversale 32 du piston 20, un tronçon tubulaire avant 38 et un tronçon tubulaire arrière 40.

Le tronçon tubulaire avant 38 de la jupe 36 est destiné à coopérer plus particulièrement avec une surface cylindrique interne 42 de la partie avant 24 du corps de cylindre 17 qui délimite la chambre hydraulique 16.

Le tronçon arrière 40 de la jupe 36 du piston 20 coulisse axialement dans la partie arrière 26 du corps de cylindre 17 et comporte une portion conique 77 qui autorise un léger débattement angulaire de la tige 22 autour de son extrémité avant 23.

Plus précisément, le tronçon arrière 40 coopère avec un tube arrière de guidage 50 qui est rapporté axialement dans la partie arrière 26 du corps principal 18 et dont une surface cylindrique interne 52 est de diamètre sensiblement égal au diamètre de la surface cylindrique interne 42 de la partie avant 24 du corps principal 18. Le tube 50 est avantageusement en matière plastique.

Le tube arrière 50, dans ce mode de réalisation, comporte un collet radial interne 62 qui est réalisé venu de matière avec le tube 50. Une telle conception d'un cylindre récepteur 10 permet donc de réaliser une étanchéité particulièrement fiable et performante de la chambre d'étanchéité 16 tout en favorisant la facilité de montage du cylindre 10.

Le tronçon avant 38 de la jupe annulaire 36 du piston 20 délimite un logement cylindrique qui permet le guidage d'un ressort de compression 64 qui est interposé, dans la chambre hydraulique 16, entre la paroi transversale avant 28 du corps principal 18 et la face avant transversale 30 du piston 20, dans le but de forcer le piston 20 au contact de la tige de commande 22.

De manière similaire, le tronçon arrière tubulaire 40 de la jupe annulaire 36 délimite un logement cylindrique dans lequel est reçue l'extrémité axiale avant de la tige de commande 22.

L'étanchéité de la chambre hydraulique 16 par rapport à l'extérieur est assurée par deux joints d'étanchéité, primaire 66 et secondaire 68, qui sont portés par le corps de cylindre 17 et coopèrent avec la surface cylindrique externe 48 de la jupe annulaire 36 du piston 20.

Dans le mode de réalisation de l'invention illusté aux figures 1 et 2, les coupelles primaire 66 et secondaire 68 sont toutes les deux des coupelles à lèvres et elles sont portées par le tube arrière de guidage 50 dont l'extrémité axiale avant 74 est en butée contre une paroi transversale avant 78 délimitant, à l'avant, la partie arrière 26 du corps principal 18.

La coupelle primaire 66 est reçue dans un premier logement cylindrique avant 80 qui débouche dans l'extrémité axiale avant 74 du tube 50 tandis que la coupelle secondaire 68 est reçue dans un second logement cylindrique 82 agencé axialement en arrière du premier logement 80 et de diamètre inférieur à celui-ci.

Une face axiale d'épaulement délimite les deux logements 80, 82 et forme une butée pour la rondelle d'appui 72 de la coupelle primaire 66. Le diamètre externe du joint 66 est ici supérieur à celui du joint 68.

Enfin, dans ce mode de réalisation, le tube arrière 50 est fixé axialement dans la partie arrière 26 du corps principal 18 par une broche transversale 84 qui est reçue dans des orifices transversaux 86 agencés à l'extrémité axiale arrière 60 du corps principal 18 et qui coopère avec l'extrémité axiale arrière 58 du tube arrière de guidage 50.

On peut également prévoir de réaliser la fixation axiale du tube arrière 50 en utilisant un dispositif à baïonnette (non représenté).

Une telle réalisation d'un cylindre selon l'invention permet également un montage simple de l'ensemble des composants, selon une seule direction, en constituant tout d'abord un sous-ensemble autour duquel est emboîté le corps principal 18.

En effet, il est tout d'abord possible d'agencer successivement dans le tube arrière 50 la coupelle secondaire 68, la rondelle d'appui 72, la coupelle primaire 66 puis le piston 20.

Ensuite, le ressort 64 est disposé dans le logement cylindrique déterminé par la portion tubulaire avant 38 de la jupe 36 du piston 20 et le corps principal 18 peut être emboîté axialement autour de cet ensemble.

Pour faciliter l'entrée de l'extrémité axiale avant 44 du piston 20 dans la chambre hydraulique 16 lorsque le corps principal 18 est emboîté axialement sur le sous-ensemble prémonté, l'extrémité avant 44 du piston 20 et l'extrémité arrière de la chambre 16 sont chanfreinées.

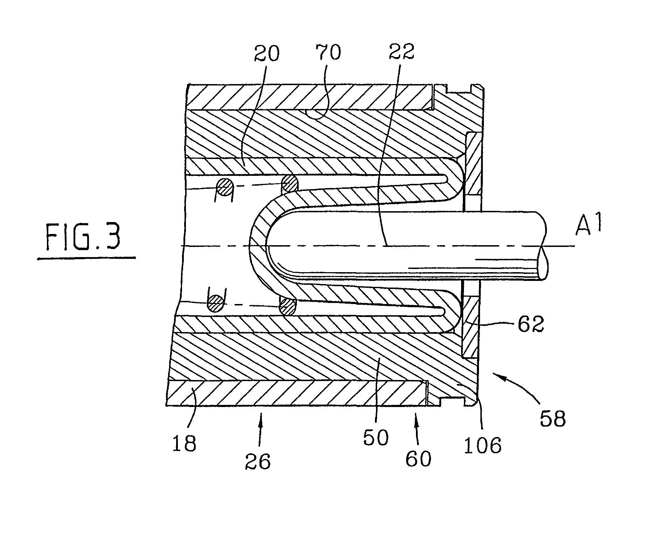

En variante et comme illustré à la figure 3, le tube arrière 50 est fixé dans le corps principal 18 par collage ou par soudage et son extrémité axiale arrière 58 affleure à l'extrémité axiale arrière 60 du corps principal 18 et comporte un collet radial interne 62, qui est réalisé sous la forme d'une pièce indépendante rapportée, et qui permet de limiter vers l'arrière la course axiale du piston 20 dans le corps de cylindre 17.

On notera que dans cette variante, le collage ou le soudage évite toute fuite entre la périphérie interne du corps principal 18 et la périphérie externe du tube 50. Par ailleurs, l'extrémité axiale arrière 58 du tube 50 dépasse axialement vers l'arrière au-delà de l'extrémité arrière 60 du corps principal 18 et comporte un collet radial externe 106 qui coopère avec l'extrémité arrière 60 du corps principal 18 pour déterminer la position axiale du tube 50 dans le corps principal 18.

Ainsi, on peut prévoir que la fixation du collet radial interne 62 soit la dernière opération de l'assemblage. Il est alors possible d'utiliser, pour le montage du sous-ensemble, un faux piston (non représenté) dont les caractéristiques dimensionnelles facilitent les diverses opérations de montage et d'assemblage. Le faux piston est remplacé par le piston 20 définitif avant que le collet radial interne 62 ne se soit rapporté sur le tube arrière 50.

Dans la variante de la figure 3, le piston 20 est réalisé par l'emboutissage d'une tôle métallique.

L'invention a été ci-dessus décrite pour un cylindre récepteur, mais on pourra transposer aisément les enseignements de l'invention pour réaliser un cylindre émetteur de structure similaire.

Ainsi qu'on l'aura compris, s'agissant d'une application à un embrayage de véhicule automobile, lorsque le piston 20 est en position avancée l'embrayage est engagé, le diaphragme, que comporte usuellement l'embrayage, repousse via la fourchette de débrayage la tige 22, le ressort 64 étant alors comprimé. La chambre hydraulique 16 est alors dépressurisée. Le ressort 64 exerce alors une précharge permettant d'appliquer constamment la butée de débrayage, manoeuvrée par la fourchette de débrayage, au contact du diaphragme.

En pressurisant la chambre 16, on déplace le piston et donc la tige 22, la fourchette de débrayage et la butée de débrayage. Lorsque le piston 30 occupe sa position reculée l'embrayage est alors désengagé.

Bien entendu le tube arrière peut être métallique.

Néanmoins il est avantageux qu'il soit en matière plastique de façon qu'il se dilate de la même manière que le corps principal 18. En outre le tube arrière 50, ainsi que le corps principal 18, servent au guidage du piston. Dans ce cas, le corps principal et le tube arrière sont avantageusement en matière plastique à faible coefficient de frottement. On appréciera, lorsque le piston est embouti, que l'on réduit l'encombrement axial puisque la tige de commande pénètre au moins à l'intérieur de la spire d'extrémité du ressort 64.

Dans tous les cas, le tube arrière 50 s'engage à la manière d'un bouchon dans le corps principal 18.

Bien entendu, on peut prévoir un joint torique entre la périphérie interne du corps principal 18 et la périphérie externe du tube arrière, ledit joint étant monté par exemple dans une gorge du corps principal.

Toute fuite est ainsi évitée à ce niveau.

Bien entendu, on peut prévoir sur le piston des patins de guidage, en matière à faible coefficient de frottement et la présence du deuxième joint 68 n'est pas obligatoire, ce deuxième joint étant là pour réaliser une étanchéité parfaite en cas de fuite au niveau du premier joint.

## Revendications

1. Cylindre de commande (10) pour un dispositif de commande hydraulique d'un embrayage de véhicule automobile, du type dans lequel un corps principal (18) de forme générale tubulaire étagée comporte une partie tubulaire avant (24), fermée à l'avant, et une partie tubulaire arrière (26) de diamètre supérieur ouverte à l'arrière, les deux parties étant délimitées axialement par une paroi transversale annulaire (78), du type dans lequel une chambre hydraulique (16) est délimitée dans la partie avant (24) du corps principal (18) par un piston (20) dont un tronçon arrière (40) est guidé dans un tube arrière (50) monté dans la partie arrière (26) du corps principal (18), du type dans lequel l'étanchéité du cylindre (10) est réalisée par deux joints annulaires (66, 68) formant deux coupelles à lèvres, primaire (66) et secondaire (68), portées par le tube arrière (50), et qui coopèrent avec le piston (20), et du type dans lequel est emboîté axialement, dans le corps principal (18), un sous-ensemble prémonté formé des autres composants du cylindre (10), le tube arrière (50) étant monté sur le piston (20), **caractérisé en ce que** la coupelle primaire (66) est reçue dans un premier logement cylindrique interne (80) débouchant dans l'extrémité axiale avant (74) du tube arrière (50), **en ce que** la coupelle secondaire (68) est reçue dans un second logement cylindrique interne (82) du tube (50) qui débouche, à l'avant, dans le premier logement (80) et qui est de diamètre inférieur au premier logement (80).

2. Cylindre selon l'une quelconque des revendications précédentes, **caractérisé en ce que** l'extrémité axiale avant (44) du piston (20) est chanfreinée pour faciliter son introduction dans la partie avant (24) du corps principal (18).

3. Cylindre selon l'une quelconque des revendications précédentes, **caractérisé en ce que** le tube arrière (50) et le corps principal (18) sont réalisés en matière plastique, et **en ce qu'**ils sont fixés l'un à l'autre par soudage ou par collage.

4. Cylindre selon la revendication 3, **caractérisé en ce que** le tube arrière (50) comporte un collet radial externe (106) qui est agencé à son extrémité axiale arrière (58) et qui comporte une face annulaire avant agencée en regard de l'extrémité axiale arrière (60) du corps principal (18), et **en ce que** le collage ou le soudage sont réalisés, au moins en partie, entre les faces en regard du collet radial externe (106) et de l'extrémité arrière (60) du corps principal (18).

5. Cylindre selon l'une quelconque des revendications précédentes, **caractérisé en ce qu'**il est prévu un collet radial interne (62) agencé à l'extrémité axiale arrière (58) du tube arrière (50) pour former une butée axiale arrière pour le piston (20) qui est susceptible de se déplacer axialement dans le cylindre, et **en ce que** le collet radial interne (62) est réalisé sous la forme d'une pièce rapportée de manière à permettre l'utilisation, au cours du montage du sous-ensemble, et au cours de l'assemblage du cylindre (10), d'un faux piston dont les caractéristique géométriques facilitent l'assemblage, le faux piston étant remplacé ensuite par le piston (20) définitif avant que le collet radial interne (62) ne soit rapporté sur le tube arrière (50).

6. Cylindre selon l'une quelconque des revendications 1 à 4, **caractérisé en ce que** le tube arrière comporte un collet radial interne (62) qui est réalisé venu de matière avec le tube (50).

7. Cylindre selon l'une quelconque des revendications 1 ou 2, **caractérisé en ce que** le tube arrière (50) est fixé axialement dans la partie arrière (26) du corps principal 18 par une broche transversale (84) qui est reçue dans des orifices transversaux (86) agencés à l'extrémité axiale arrière (60) du corps principal (18) et qui coopère avec l'extrémité axiale arrière (58) du tube arrière de guidage (50).

8. Procédé pour l'assemblage d'un cylindre de commande selon l'une quelconque des revendications 1 à 7, **caractérisé en ce que** le montage du sous-ensemble comprend les étapes suivantes :
- monter le tube arrière (50) sur le piston (20) ;
- monter la coupelle secondaire (68) dans le second logement (82) ;
- monter une rondelle d'appui (72) dans le premier logement (80), en butée contre une face transversale arrière délimitant les premier et second logements (80, 82) ;
- monter la coupelle primaire (66) dans le premier logement (80), en appui contre la rondelle (72).

9. Procédé selon la revendication 8, **caractérisé en ce que**, lorsque le corps principal (18) est emboîté autour du sous ensemble, un ressort de compression (64) est interposé axialement entre une paroi transversale avant (28) de la partie avant (24) du corps principal (18) et une face transversale avant (30) du piston (20).

## Patentansprüche

1. Betätigungszylinder (10) für eine Vorrichtung zur hydraulischen Betätigung einer Kraftfahrzeugkupplung, bei dem ein Hauptkörper (18) mit einer abgestuften rohrförmigen Gesamtform einen an der Vorderseite geschlossenen rohrförmigen vorderen Teil (24) und einen an der Rückseite offenen rohrförmigen hinteren Teil (26) mit größerem Durchmesser umfasst, wobei die beiden Teile axial durch eine ringförmige Querwand (78) begrenzt sind, wobei eine Hydraulikkammer (16) im vorderen Teil (24) des Hauptkörpers (18) durch einen Kolben (20) begrenzt wird, dessen hinteres Teilstück (40) in einem hinteren Rohr (50) geführt ist, das im hinteren Teil (26) des Hauptkörpers (18) angebracht ist, wobei die Abdichtung des Zylinders (10) durch zwei Ringdichtungen (66, 68) erfolgt, die zwei vom hinteren Rohr (50) getragene Dichtlippenteller, einen Primärdichtteller (66) und einen Sekundärdichtteller (68), bilden und die mit dem Kolben (20) zusammenwirken, und wobei in dem Hauptkörper (18) eine vormontierte Untergruppe axial eingefügt ist, die aus den anderen Bestandteilen des Zylinders (10) besteht, wobei das hintere Rohr (50) am Kolben (20) angebracht ist,
**dadurch gekennzeichnet ,**
**dass** der Primärdichtteller (66) in einer ersten zylindrischen inneren Aufnahme (80) aufgenommen ist, die im axialen Vorderende (74) des Rohrs (50) mündet, und dass der Sekundärdichtteller (68) in einer zweiten zylindrischen inneren Aufnahme (82) des Rohrs (50) aufgenommen ist, die vorne in der ersten Aufnahme (80) mündet und die einen kleineren Durchmesser hat als die erste Aufnahme (80).

2. Zylinder nach dem vorangehenden Anspruch, **dadurch gekennzeichnet , dass** das vordere axiale Ende (44) des Kolbens (20) abgeschrägt ist, um seine Einführung in den vorderen Teil (24) des Hauptkörpers (18) zu erleichtern.

3. Zylinder nach einem der vorangehenden Ansprüche, **dadurch gekennzeichnet , dass** das hintere Rohr (50) und der Hauptkörper (18) aus Kunststoff ausgeführt sind und dass sie durch Verschweißen oder Verkleben aneinander befestigt sind.

4. Zylinder nach Anspruch 3, **dadurch gekennzeichnet, dass** das hintere Rohr (50) einen äußeren radialen Bund (106) umfasst, der an seinem hinteren axialen Ende (58) angeordnet ist und der eine vordere ringförmige Fläche umfasst, die gegenüber dem hinteren axialen Ende (60) des Hauptkörpers (18) angeordnet ist, und dass das Verkleben oder das Verschweißen wenigstens teilweise zwischen den gegenüberliegenden Flächen des äußeren radialen Bunds (106) und dem hinteren Ende (60) des Hauptkörpers (18) erfolgt.

5. Zylinder nach einem der vorangehenden Ansprüche, **dadurch gekennzeichnet , dass** ein innerer radialer Bund (62) vorgesehen ist, der am hinteren axialen Ende (58) des hinteren Rohrs (50) angeordnet ist, um einen hinteren axialen Anschlag für den Kolben (20) zu bilden, der sich axial im Zylinder verschieben kann, und dass der innere radiale Bund (62) in Form eines angefügten Teils ausgeführt ist, um im Verlauf der Montage der Untergruppe und im Verlauf des Zusammenbaus des Zylinders (10) die Verwendung eines Blindkolbens zu ermöglichen, dessen geometrische Eigenschaften den Zusammenbau vereinfachen, wobei der Blindkolben anschließend durch den endgültigen Kolben (20) ersetzt wird, bevor der innere radiale Bund (62) am hinteren Rohr (50) angefügt wird.

6. Zylinder nach einem der Ansprüche 1 bis 4, **dadurch gekennzeichnet , dass** das hintere Rohr einen inneren radialen Bund (62) umfasst, der einstückig mit dem Rohr (50) ausgeführt ist.

7. Zylinder nach einem der Ansprüche 1 oder 2, **dadurch gekennzeichnet , dass** das hintere Rohr (50) axial im hinteren Teil (26) des Hauptkörpers (18) durch einen Querstift (84) befestigt ist, der in Queröffnungen (86) eingesetzt ist, die am hinteren axialen Ende (60) des Hauptkörpers (18) angeordnet sind, und der mit dem hinteren axialen Ende (58) des hinteren Führungsrohrs (50) zusammenwirkt.

8. Verfahren zum Zusammenbau eines Betätigungszylinders nach einem der Ansprüche 1 bis 7, **dadurch gekennzeichnet, dass** die Montage der Untergruppe die folgenden Schritte umfasst:
- Anbringung des hinteren Rohrs (50) am Kolben (20);
- Anbringung des Sekundärdichttellers (68) in der zweiten Aufnahme (82);
- Anbringung einer Stützscheibe (72) in der ersten Aufnahme (80) anstoßend an eine hintere Querfläche, die die erste und zweite Aufnahme abgrenzt;
- Anbringung des Primärdichttellers (66) in der ersten Aufnahme (80) in Anlage an der Stützscheibe (72).

9. Verfahren nach Anspruch 8, **dadurch gekennzeichnet, dass**, wenn der Hauptkörper (18) um die Untergruppe herum eingepasst wird, eine Druckfeder (64) axial zwischen einer vorderen Querwand (28) des vorderen Teils (24) des Hauptkörpers (18) und einer vorderen Querfläche (30) des Kolbens (20) eingefügt wird.

## Claims

1. Control cylinder (10) for a hydraulic control device for a motor vehicle clutch, of the type in which a principal body (18) with a stepped tubular shape overall comprises a front tubular part (24), closed at the front, and a rear tubular part (26) with a greater diameter open at the rear, the two parts being delimited axially by an annular transverse wall (78), of the type in which a hydraulic chamber (16) is delimited in the front part (24) of the principal body (18) by a piston (20), a rear portion (40) of which is guided in a rear tube (50) mounted in the rear part (26) of the principal body (18), of the type in which the fluidtightness of the cylinder (10) is produced by two annular seals (66, 68) forming two cups with lips, primary (66) and secondary (68), carried by the rear tube (50), and which cooperate with the piston (20), and of the type in which there is fitted axially, in the main body (18), a premounted subassembly formed by the other components of the cylinder (10), the rear tube (50) being mounted on the piston (20), **characterised in that** the primary cup (66) is received in a first internal cylindrical housing (80) opening out in the front axial end (74) of the rear tube (50), and **in that** the secondary cup (68) is received in a second internal cylindrical housing (82) in the tube (50) which opens out, at the front, in the first housing (80) and which has a lesser diameter than the first housing (80).

2. Cylinder according to any one of the preceding claims, **characterised in that** the front axial end (44) of the piston (20) is bevelled in order to facilitate its introduction into the front part (24) of the main body (18).

3. Cylinder according to any one of the preceding claims, **characterised in that** the rear tube (50) and the principal body (18) are produced from plastics material, and **in that** they are fixed to each other by welding or by adhesive bonding.

4. Cylinder according to Claim 3, **characterised in that** the rear tube (50) comprises an external radial collar (106) which is arranged at its rear axial end (58) and which comprises a front annular face arranged opposite the rear axial end (60) of the principal body (18), and **in that** the adhesive bonding or welding are carried out, at least partly, between the opposite faces of the external radial collar (106) and of the rear end (60) of the principal body (18).

5. Cylinder according to any one of the preceding claims, **characterised in that** an internal radial collar (62) is provided, arranged at the rear axial end (58) of the rear tube (50) in order to form a rear axial stop for the piston (20) which is able to move axially in the cylinder, and **in that** the internal radial collar (62) is produced in the form of an attached piece so as to permit the use, during the mounting of the subassembly, and during the assembly of the cylinder (10), of a false piston whose geometric characteristics facilitate assembly, the false piston then being replaced by the definitive piston (20) before the internal radial collar (62) is attached to the rear tube (50).

6. Cylinder according to any one of Claims 1 to 4,
**characterised in that** the rear tube comprises an internal radial collar (62) which is produced in one piece with the tube (50).

7. Cylinder according to any one of Claims 1 or 2, **characterised in that** the rear tube (50) is fixed axially in the rear part (26) of the principal body (18) by a transverse pin (84) which is received in transverse orifices (86) arranged at the rear axial end (60) of the principal body (18) and which cooperates with the rear axial end (58) of the rear guide tube (50).

8. Method for assembling a control cylinder according to any one of Claims 1 to 7, **characterised in that** the mounting of the subassembly comprises the following steps:
- mounting the rear tube (50) on the piston (20);
- mounting the secondary cup (68) in the second housing (82);
- mounting a support washer (72) in the first housing (80), in abutment against a rear transverse face delimiting the first and second housings (80, 82);
- mounting the primary cup (66) in the first housing (80), in abutment against the washer (72).

9. Method according to Claim 8, **characterised in that**, when the principal body (18) is fitted around the subassembly, a compression spring (64) is interposed axially between a front transverse wall (28) of the front part (24) of the principal body (18) and a front transverse face (30) of the piston (20).
